# FASCICULE DE BREVET EUROPEEN

(11) **EP 0 995 022 B1**
(45) Date de publication et mention de la délivrance du brevet: **09.10.2002**
(21) Numéro de dépôt: 98938659.4
(22) Date de dépôt: 26.06.1998
(51) Int. Cl.: F02D 41/06, F02D 41/34

(54) **PROCEDE D'INJECTION DE CARBURANT AU DEMARRAGE D'UN MOTEUR A COMBUSTION INTERNE**
KRAFTSTOFFEINSPRITZUNGSVERFAHREN FÜR EINE BRENNKRAFTMASCHINE WÄHREND DES STARTS
METHOD FOR FUEL INJECTION FOR STARTING AN INTERNAL COMBUSTION ENGINE

(30) Priorité: 07.07.1997 FR 9708572
(43) Date de publication de la demande: 26.04.2000
(73) Titulaire: Siemens VDO Automotive S.A.S., 31036 Toulouse cedex 01 (FR)
(72) Inventeur: MARCA, Christian, F-31170 Tournefeuille (FR)
(74) Mandataire: Berg, Peter
(86) Numéro de dépôt international: EP9803924
(87) Numéro de publication internationale: WO99002832

(56) Documents cités:
- DE-A- 3 623 042
- DE-A- 4 317 635
- GB-A- 2 233 709
- US-A- 5 245 972
- US-A- 5 390 641

## Description

La présente invention a pour objet un procédé d'injection de carburant au démarrage d'un moteur à combustion interne, et plus particulièrement, un procédé permettant un démarrage rapide, sans à-coups, même à très basse température.

La commande des moteurs à combustion interne multi-cylindres à quatre temps s'effectue actuellement selon le procédé dit d'injection séquentielle. Dans ce procédé, on associe à chaque cylindre un injecteur et l'on commande celui-ci en fonction de la position angulaire du moteur dans le cycle de telle sorte qu'une quantité prédéterminée de carburant soit injectée à une phase précise du cycle du moteur dans chaque cylindre. Pour ce faire, on reconnaît la position du moteur sur la base de signaux fournis par des capteurs associés à des cibles liées au vilebrequin et à l'arbre à came. On détermine le cylindre devant passer en phase d'admission et l'on commande l'injecteur associé à ce cylindre de telle sorte que la quantité de carburant voulue soit injectée avant le début de la phase d'admission.

Cependant, lors du démarrage du moteur, la position exacte de celui-ci n'est pas connue. On connaît, de la demande de brevet français 2 516 982, un dispositif adapté pour mettre en oeuvre un procédé d'injection pour un moteur à combustion interne tel qu'à la fermeture d'un contact de démarrage du moteur, on injecte simultanément dans tous les cylindres une première quantité de carburant, et lors de la reconnaissance d'un signal de synchronisation du moteur, on injecte le carburant de manière séquentielle, cylindre par cylindre, selon un ordre prédéterminé une fois par cycle.

On a cependant constaté qu'il pouvait se produire des ratés de combustion dans un des cylindres conduisant à un ralentissement du moteur et parfois même à son calage en particulier lors de démarrage par grand froid.

La présente invention propose donc un procédé de commande de l'injection de carburant dans un moteur à combustion interne qui ne présente pas ce risque de raté de combustion et permette ainsi un démarrage rapide et assuré du moteur quel que soit les conditions de fonctionnement.

On atteint ces buts de l'invention, ainsi que d'autres qui apparaîtront dans la suite de la présente description, au moyen d'un procédé d'injection de carburant au démarrage d'un moteur à combustion interne dans lequel, à la fermeture d'un contacteur de démarrage, on commande simultanément des moyens d'injection de carburant pour délivrer une première quantité de carburant à une pluralité de cylindres, et après reconnaissance d'un signal de synchronisation, on commande séquentiellement lesdits moyens d'injection. Selon l'invention, on mesure un angle de rotation séparant la position angulaire du moteur lors de la fermeture du contacteur de démarrage de la position angulaire atteinte lors de la reconnaissance du signal de synchronisation, on compare cet angle à une valeur prédéterminée, et lorsque l'angle de rotation est supérieur à la valeur prédéterminée, on injecte une quantité complémentaire de carburant dans un cylindre déterminé en fonction du cylindre pour lequel le signal de synchronisation a été reconnu.
Selon une caractéristique importante de l'invention, la valeur prédéterminée est calculée en fonction de l'avance angulaire d'un repère de position de point mort haut d'un cylindre par rapport à la position réelle de ce point mort haut et d'un retard à la fermeture d'une soupape d'admission de ce cylindre.
Selon une autre caractéristique de l'invention, la quantité complémentaire de carburant est injectée dans le cylindre précédent immédiatement dans le cycle le cylindre pour lequel le signal de synchronisation a été reconnu.
Selon une autre caractéristique de l'invention, la quantité complémentaire de carburant est fonction de la première quantité délivrée et de l'écart angulaire entre la position angulaire du moteur lors de la fermeture du contacteur de démarrage et la position angulaire atteinte lors de la reconnaissance du signal de synchronisation.

D'autres caractéristiques et avantages du procédé selon l'invention apparaîtront à la lecture de la description qui va suivre et à l'examen des dessins annexés dans lesquels:
- la figure 1 représente un schéma d'un moteur à combustion interne et,
- la figure 2 représente un diagramme du cycle de fonctionnement d'un moteur à 4 cylindres et du procédé d'injection selon l'invention.

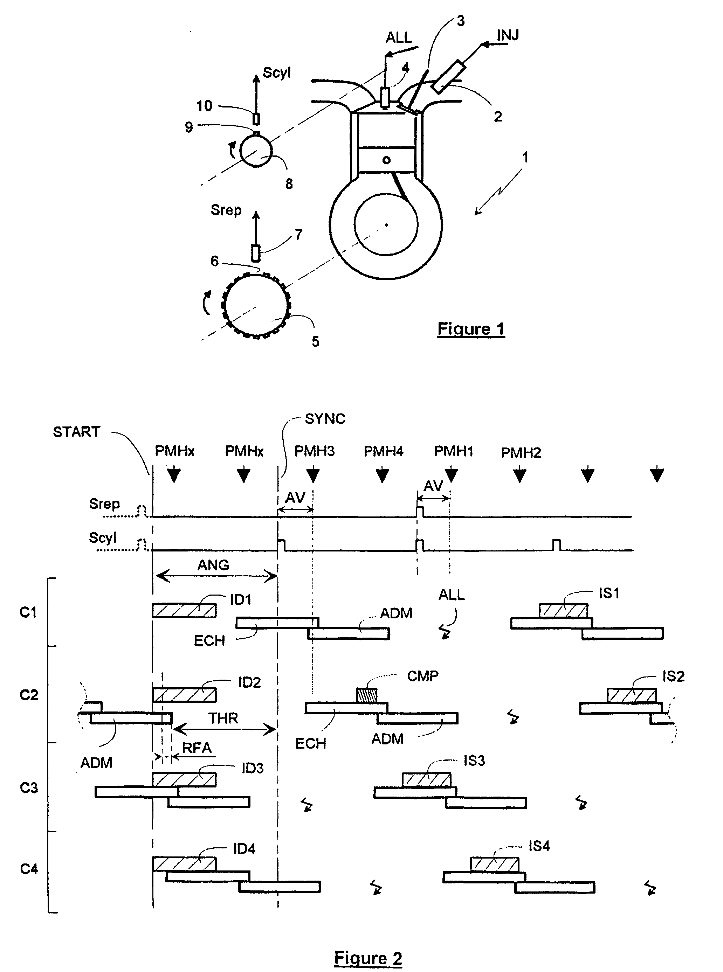

On se réfère à la figure 1 dans laquelle on a représenté un moteur à combustion interne 1 équipé de moyens d'injection de carburant 2, de soupapes d'admission 3 et d'échappement (non représentée) et de moyens d'allumage 4. On a également représenté, sur la figure, une cible 5 solidaire du vilebrequin comportant à sa périphérie des dents régulièrement espacées dont une dent est manquante, permettant ainsi de créer un repère de point mort haut 6 susceptible d'être détecté par un capteur de vitesse de rotation 7 délivrant un signal Sᵣₑₚ. Dans l'exemple d'un moteur à quatre temps à quatre cylindres, le vilebrequin effectue deux tours par cycle moteur, donc la détection du repère 6 lié à la cible 5 solidaire du vilebrequin ne permet pas de déterminer lequel de deux cylindres, par exemple C1 et C3, est au point mort haut succédant à une phase d'admission. De ce fait, une cible 8 reliée à l'arbre à came permet, lors de la détection d'un repère 9 par un capteur 10, de fournir un signal S_{cyl} de détermination de cylindre et de lever l'indétermination, cette cible effectuant un tour par cycle moteur. Avantageusement, les repères 6 et 9 sont agencés de manière à être détectés simultanément par les capteurs 7 et 10 pour un premier tour du moteur dans le cycle, le repère 6 étant seul présent lors du tour suivant. De même, la position des repères sur les cibles est telle que leur détection intervient avec un angle d'avance AV prédéterminé (fig.2) par rapport à la position réelle du point mort haut du cylindre

On se réfère maintenant à la figure 2 pour expliciter le fonctionnement du procédé d'injection selon l'invention. On a représenté, dans une première ligne de la figure, la position des points morts hauts (PMHᵢ) de chaque cylindre i (i=1 à 4) sur deux cycles du moteur. La ligne suivante repérée S_{cyl} représente le signal délivré par le capteur 10 en regard de la cible 8 liée à l'arbre à came du moteur. De même, à la ligne suivante, on a représenté le signal Sᵣₑₚ fourni par le capteur 7 placé en regard de la cible 5 solidaire du vilebrequin. On a représenté ensuite respectivement pour chacun des cylindres:
- les périodes d'ouverture de la soupape d'échappement ECHᵢ et de la soupape d'admission ADMᵢ du cylindre,
- les périodes d'ouverture de l'injecteur associé au dit cylindre ainsi que,
- la position à laquelle une étincelle d'allumage ALL est fournie au moyen d'allumage associé au cylindre considéré.

Lors de la fermeture d'un contacteur de démarrage, matérialisée sur la figure par un trait d'axe vertical repéré START, on commande simultanément les injecteurs pour délivrer une première quantité de carburant IDᵢ à chaque cylindre. Le moteur est entraîné par son démarreur pendant un angle ANG jusqu'à ce qu'un repère de point mort haut soit détecté par le signal Sᵣₑₚ. A ce moment, l'analyse des signaux S_{cyl} et Sᵣₑₚ permet de déterminer que le prochain cylindre atteignant le PMH sera le cylindre C3. Cette détection est effectuée en avance d'un angle AV prédéterminé, par exemple 90 degrés, par rapport à la position réelle du point mort haut du cylindre. Dès lors, la position exacte du moteur est déterminée, ce qui est matérialisé par un trait mixte vertical repéré SYNC et une première étincelle d'allumage peut être générée dans le cylindre C3 au voisinage de son point mort haut PMH₃. Toute ambiguïté relative à la succession des cylindres dans le cycle est levée et une étincelle d'allumage ainsi qu'une commande d'ouverture des injecteurs peut être délivrée séquentiellement dans chaque cylindre.

Cependant, lorsqu'on observe ce qui ce passe pour le cylindre C2, on constate que dès la fermeture du contact de démarrage, la quantité d'injection ID₂ injectée dans le cylindre C2 a été injectée pendant une phase d'ouverture de la soupape d'admission. De ce fait, une certaine quantité de carburant a pénétré à l'intérieur du cylindre. Comme aucune étincelle d'allumage n'est délivrée à ce cylindre puisque le premier cylindre reconnu est le cylindre C3, la quantité de carburant ayant pénétré dans le cylindre C2 lors de l'injection de démarrage est expulsée à la phase d'échappement suivante pour ce cylindre sans participer à une combustion. De ce fait, lors de la prochaine combustion dans le cylindre C2, la quantité de carburant participant à la combustion est amputée de la partie expulsée lors de la phase d'échappement. Le mélange sera alors pauvre et peut entraîner des ratés de combustion ce qui a pour conséquence un ralentissement du régime du moteur lors de la phase critique de sa mise en rotation. Ce ralentissement peut conduire au calage du moteur, particulièrement par grand froid, lorsque les frottements liés à la viscosité du lubrifiant sont maximaux et l'énergie délivrée par la batterie au démarreur est minimale. Pour éviter cet appauvrissement du mélange dans le cylindre C2, selon l'invention, on injecte une quantité complémentaire de carburant CMP propre à compenser cet appauvrissement avant la prochaine phase d'admission de ce cylindre. La prochaine combustion du cylindre C2 sera alors effectuée en présence d'un mélange air / carburant dont la richesse sera corrigée et rendue analogue à la richesse dans les autres cylindres. On peut constater que la quantité de carburant ayant pénétré dans le cylindre C2, lors de l'injection de démarrage ID₂ et expulsé lors de la phase d'échappement subséquente avant qu'une combustion ait pu avoir lieu, dépend de la position angulaire du moteur à l'instant de démarrage START par rapport au cycle d'ouverture des soupapes de ce cylindre.

La distance angulaire entre la fermeture de la soupape du cylindre C2 et la position du moteur à l'instant de sa synchronisation est une valeur prédéterminée THR servant de seuil de déclenchement de l'injection complémentaire de carburant. Cette valeur est définie lors de la construction du moteur et ne dépend que du retard à la fermeture d'admission RFA, paramètre déterminé par le calage de la distribution du moteur, et de l'avance angulaire du repère 6 de point mort haut porté par la cible 5 par rapport à la position réelle de ce point mort haut.

Ainsi donc, si la position angulaire du moteur à l'instant de démarrage est séparée d'une distance angulaire ANG supérieure à cette valeur de seuil THR, on effectuera une injection complémentaire dans le cylindre C2. Lorsque l'injection de démarrage ID₂ s'effectue après la fermeture de la soupape d'admission du cylindre C2, c'est à dire pour une distance angulaire ANG inférieure à cette valeur de seuil THR il n'y a pas de carburant qui pénètre dans celui-ci et donc, il n'est pas nécessaire d'effectuer d'injection complémentaire.

La quantité de carburant complémentaire CMP à injecter dépend de la proportion de la première quantité injectée lors du démarrage, déterminée comme connu en soi par des essais au banc moteur en fonction de la température du liquide de refroidissement, qui a été injectée pendant l'ouverture de la soupape d'admission. En supposant le débit de carburant délivré par les moyens d'injection sensiblement constant pendant leur période d'ouverture, on comprend que cette proportion soit fonction de la différence entre la distance angulaire ANG et la valeur de seuil THR.

Bien entendu, dans l'exemple qui vient d'être décrit, on s'est basé sur une synchronisation du moteur sur le repère précédant immédiatement (et associé au) le cylindre C3. Il apparaîtra immédiatement à l'homme du métier que le même processus peut être décalé d'un tour moteur (360 degrés du vilebrequin). La synchronisation du moteur s'effectue alors en reconnaissant la présence simultanée des repères Sᵣₑₚ et S_{cyl}, significative du repère associé au cylindre C1. Dans ce cas, le cylindre susceptible de faire l'objet d'une injection de carburant complémentaire CMP sera le cylindre C4, précédant immédiatement le cylindre C1 dans le cycle.

Bien entendu, l'invention n'est pas limitée au mode de réalisation décrit et représenté qui n'a été donné qu'à titre d'exemple. Le procédé selon l'invention pourra être appliqué à tout moteur à quatre temps, comportant au moins trois cylindres.

## Revendications

1. Procédé d'injection de carburant au démarrage d'un moteur à combustion interne (1), selon lequel à la fermeture d'un contacteur de démarrage on commande simultanément des moyens d'injection de carburant pour délivrer une première quantité (IDᵢ) de carburant à une pluralité de cylindres (Cᵢ), et après reconnaissance d'un signal de synchronisation (S_{cyl}, Sᵣₑₚ), on commande séquentiellement lesdits moyens d'injection, **caractérisé en ce que** :
• on mesure un angle de rotation (ANG) séparant la position angulaire (START) du moteur lors de la fermeture du contacteur de démarrage de la position angulaire (SYNC) atteinte lors de la reconnaissance du signal de synchronisation,
• on compare cet angle à une valeur prédéterminée (THR), et
• lorsque l'angle de rotation est supérieur à la valeur prédéterminée, on injecte une quantité complémentaire (CMP) de carburant dans un cylindre (C₂) déterminé en fonction du cylindre (C₃) pour lequel le signal de synchronisation a été reconnu.

2. Procédé selon la revendication 1, **caractérisé en ce que** la valeur prédéterminée (THR) est calculée en fonction de l'avance angulaire (AV) d'un repère (6) de position de point mort haut d'un cylindre (C₃) par rapport à la position réelle de ce point mort haut (PMH₃) et d'un retard (RFA) à la fermeture d'une soupape d'admission (3) de ce cylindre.

3. Procédé selon la revendication 1, **caractérisé en ce que** la quantité complémentaire (CMP) de carburant est injectée dans le cylindre précédent immédiatement dans le cycle le cylindre pour lequel le signal de synchronisation a été reconnu.

4. Procédé selon la revendication 1, **caractérisé en ce que** la quantité complémentaire (CMP) de carburant est fonction de la première quantité (IDᵢ) délivrée et de l'écart angulaire entre la position angulaire (START) du moteur lors de la fermeture du contacteur de démarrage et la position angulaire (SYNC) atteinte lors de la reconnaissance du signal de synchronisation.

## Patentansprüche

1. Verfahren zur Kraftstoffeinspritzung beim Start einer Brennkraftmaschine (1), bei welchem beim Schließen eines Startschalters gleichzeitig Kraftstoffeinspritzmittel angesteuert werden, um eine erste Kraftstoffmenge (IDᵢ) an eine Anzahl von Zylindern (C₁) abzugeben, und nach dem Erkennen eines Synchronisationssignals (S_{cyl}, Sᵣₑₚ) die Einspritzmittel sequentiell gesteuert werden, **dadurch gekennzeichnet, dass**:
ein Drehwinkel (ANG) gemessen wird, der die Winkelposition (START) der Brennkraftmaschine beim Schließen des Startschalters von der beim Erkennen des Synchronisationssignals erreichten Winkelposition (SYNC) trennt,
dieser Winkel mit einem vorgegebenen Wert (THR) verglichen wird, und,
wenn der Drehwinkel größer als der vorgegebene Wert ist, eine zusätzliche Kraftstoffmenge (CMP) in einen Zylinder (C₂) eingespritzt wird, der in Abhängigkeit von dem Zylinder (C3) bestimmt wird, für den das Synchronisationssignal erkannt worden ist.

2. Verfahren nach Anspruch 1, **dadurch gekennzeichnet, dass** der vorgegebene Wert (THR) in Abhängigkeit von der Winkelvoreilung (AV) einer Marke (6) für die Position des oberen Totpunktes eines Zylinders (C₃) bezüglich der Istposition dieses oberen Totpunktes (PMH₃) und einer Verzögerung (RFA) der Schließung eines Einlassventils (3) dieses Zylinders berechnet wird.

3. Verfahren nach Anspruch 1, **dadurch gekennzeichnet, dass** die zusätzliche Kraftstoffmenge (CMP) in den Zylinder eingespritzt wird, der im Betriebszyklus demjenigen Zylinder unmittelbar vorhergeht, für den das Synchronisationssignal erkannt wurde.

4. Verfahren nach Anspruch 1, **dadurch gekennzeichnet, dass** die zusätzliche Kraftstoffmenge (CMP) eine Funktion der abgegebenen ersten Menge (ID;) und des Winkelabstandes zwischen der Winkelposition (START) der Brennkraftmaschine beim Schließen des Startschalters und der Winkelposition (SYNC) ist, die beim Erkennen des Synchronisationssignals erreicht wurde.

## Claims

1. Fuel injection method for ignition of an internal combustion engine (1), according to which when ignition contact is made, the fuel injection means are simultaneously commanded to deliver an initial amount (IDᵢ) of fuel to a plurality of cylinders (Cᵢ) and once a synchronisation signal is received (S_{cyl}, Sᵣₑₚ), said injection means are commanded sequentially, **characterised in that**:
• the angle of rotation (ANG) separating the angular position (START) of the engine when ignition contact is made from the angular position (SYNC) reached when the synchronisation signal is recognised is measured,
• this angle is compared to a predetermined value (THR), and
• if the angle of rotation is greater than the predetermined value, a supplementary amount (CMP) of fuel is injected into the cylinder (C₂) determined according to the cylinder (C₃) for which the synchronisation signal was recognised.

2. Method according to Claim 1, **characterised in that** the predetermined value (THR) is calculated according to the angular advance (AV) of a positional marker (6) of top dead centre of a cylinder (C₃) in relation to the actual position of this top dead centre (PMH₃) and a delay (RFA) in the closure of an intake valve (3) of this cylinder.

3. Method according to Claim 1, **characterised in that** the supplementary amount (CMP) of fuel is injected into the cylinder that, in the cycle, comes immediately before the cylinder for which the synchronisation signal was recognised.

4. Method according to Claim 1, **characterised in that** the supplementary amount (CMP) of fuel depends on the initial amount (IDᵢ) delivered and the angular difference between the angular position (START) of the engine when ignition contact is made and the angular position (SYNC) reached when the synchronisation signal is recognised.
